# EUROPEAN PATENT APPLICATION

(11) **EP 2 786 953 A1**
(43) Date of publication of application: **08.10.2014**
(21) Application number: 12854342.8
(22) Date of filing: 29.05.2012
(51) Int. Cl.: B66C 23/18, F03D 11/00, B66C 23/20

(54) **WIND POWER GENERATOR**

(30) Priority: 29.11.2011 KR 20110126039; 02.12.2011 KR 20110010748 U; 05.12.2011 KR 20110129301
(71) Applicant: Daewoo Shipbuilding & Marine Engineering Co., Ltd., Seoul 100-180 (KR)
(72) Inventor: CHO, Nak Kyun, Seoul 138-846 (KR); JUNG, Hee Yeol, Gunpo-si Gyeonggi-do 435-040 (KR); JIN, Eun Seok, Seoul 157-796 (KR)
(74) Representative: Jehle, Volker Armin
(86) International application number: PCT/KR2012/004205
(87) International publication number: WO 2013/081262

(57) **Abstract**

Disclosed is a wind power generator. The wind power generator according to the present invention includes: a crane part provided on a main frame, which is disposed within a nacelle to support a weight including a gear box or a generator, to transfer the weight inside or outside the nacelle when replacing the weight; and a tower collision prevention part spacing an elevation member supporting the weight from a tower supporting the nacelle to prevent the weight from colliding with the tower.

## Description

### [Technical Field]

The present invention relates to a wind power generator, and more particularly, to a wind power generator, which can move a heavy weight such as a generator and a gear box provided within a nacelle upon replacement or repair of the heavy weights, and can prevent the heavy weight from colliding with a tower.

### [Background Art]

A wind power generator refers to an apparatus that uses various types of windmills to convert wind energy into mechanical energy and drives the generator with the mechanical energy to produce electric power. The wind power generator employs wind, which is indefinite and clean energy, as a power source, and thus corresponds to a pollution-free power generating system free from problems, such as thermal pollution or air pollution due to heat generation, radiation leakage, and the like, unlike existing power generating systems employing fossil fuels, uranium, etc.

The wind power generator is classified into a horizontal-shaft generator and a vertical-shaft generator according to directions in which a rotary shaft for a wing is placed. The vertical-shaft wind power generator has lower efficiency than the horizontal-shaft wind power generator since its rotary shaft is perpendicular to a wind direction. Therefore, most practical wind power generators are horizontal-shaft generators. The horizontal-shaft wind power generator has been regarded as the most stable and high-efficiency wind power generator since its rotary shaft is parallel to a direction of the wind.

As main components, the wind power generator includes a rotor converting energy of wind into torque, a blade rotating while being connected to the rotor, a brake system operating to brake the rotor with the maximum aerodynamic drag by rotating a pitch angle at 90 degrees such that a main code direction of the blade can be perpendicular to a rotating surface in order to prevent overload generated in a turbine and mechanical brake system, a driving system generating constant electric power regardless of wind strength, and a tower supporting the rotor.

Some examples of such a wind power generator are disclosed in Korean Patent Publication No. 2011-0045711 (May 4, 2011), Korean Patent Publication No. 2011-0026203 (March 15, 2011), and the like.

In a conventional wind power generator including the aforementioned techniques, when a heavy weight such as a gear box, a generator, and the like is lifted using a crane or a winch, the heavy weight is shaken due to its load and high-height of a tower when affected by wind or other exterior factors. Such shaking causes the heavy weight to collide with the tower and causes a problem of damaging not only the heavy weight but also an outer wall of the tower.

Further, the conventional wind power generator employs the crane for lifting or descending (moving up or down) the heavy weight for maintenance.

There have been commercially used three kinds of crane mounted to the wind power generator, i.e., an overhead crane, a jib crane and an external crane.

The overhead crane has a structure in which a steel-frame structure stands on a main frame supporting a gear box for converting rotary motion energy of the blade into electric energy, a generator, and the like, and the crane is disposed on the steel-frame structure.

The jib crane is a device provided to the form of a robot arm. Although the jib crane is structurally vulnerable, the jib crane is capable of carrying light weights. The external crane refers to a large crane disposed at an upper portion of the tower or at a lower portion of the nacelle to transfer heavy weights.

Among these cranes for the conventional wind power generator, the overhead crane and the jib crane can deteriorate structural stability of the nacelle since the overhead crane and the jib crane transfer heavy weights weighing more than 20 tons, and have a drawback of increasing the size of the nacelle.

Further, the external crane can increase production costs when purchased and used since it has been monopolistically supplied by a specific company.

### [Disclosure]

### [Technical Problem]

It is an aspect of the present invention to provide a wind power generator which can stably lift or descend heavy weights without increasing the size of a nacelle.

### [Technical Solution]

In accordance with one aspect of the present invention, a wind power generator includes: a crane part which is provided to a main frame disposed inside a nacelle and supporting a heavy weight, such as a gear box or a generator, and transfers the heavy weight into or out of the nacelle upon replacement of the heavy weight; and a tower collision preventing part which separates a lifting member supporting the heavy weight from a tower supporting the nacelle to prevent the heavy weight from colliding with the tower.

The crane part may include: a winch disposed in the main frame and carrying the heavy weight into or out of the nacelle upon replacement of the heavy weight; and a guide rail provided to the main frame and guiding the heavy weight.

The winch may be disposed inside the main frame.

The guide rail may be disposed at an upper portion of the main frame, and the heavy weight may move on the guide rail when carried into or out of the nacelle.

The crane part may further include at least one roller provided to the main frame and supporting a wire of the winch.

The tower collision preventing part may include: a first support provided to the nacelle; a second support provided to the tower; and an induction line connecting the first support, the second support and the lifting member with one another such that a predetermined space is maintained between the lifting member and the tower.

The second support may include: a base support coupled to the tower; and a rotation support rotatably coupled to the base support.

The base support may include a stopper restricting rotation of the rotation support.

The tower collision preventing part may comprise two pairs of second supports separated from each other while facing each other around the tower.

The induction line may include: a first induction line connecting the first support to the second support; and a second induction line connecting the first induction line to the lifting member. Here, the second induction line is secured at one end thereof to the lifting member to be lifted or descended integrally with the lifting member, and connected at the other end thereof to the first induction line to move up and down along the first induction line.

The lifting member may include a wire connected to the crane part.

The tower collision preventing part may include a lifting support unit, which includes: a tower guide rail provided to the tower; and a support module supported at one end thereof to be lifted or descended along the tower guide rail and connected at the other end thereof to the lifting member to resiliently maintain a distance between the lifting member and the tower.

The support module may include: a base bar supported to be lifted or descended along the tower guide rail; and a support bar connected at one end thereof to the base bar to be retractable in a direction transverse to a longitudinal direction of the tower, and connected at the other end thereof to the lifting member.

The wind power generator may further include an enlarged portion at one end of the base bar supported on the tower guide rail.

The other end of the support bar connected to the lifting member may have a ring shape.

The tower collision preventing part may include two pairs of tower guide rails separated from each other while facing each other around the tower.

### [Advantageous Effects]

Exemplary embodiments of the present invention provide a wind power generator, which is capable of lifting or descending heavy weights without increasing the size of a nacelle and is structurally stable by preventing the heavy weights from colliding with a tower while the heavy weights are lifted or descended.

### [Description of Drawings]

Fig. 1 is a schematic view of a wind power generator according to one exemplary embodiment of the present invention.
Fig. 2 is a plan view of the wind power generator of Fig. 1.
Fig. 3 is a schematic view of a crane part provided within a nacelle in the wind power generator shown in Fig. 1.
Fig. 4 is a schematic view of the crane part shown in Fig. 3 in use.
Fig. 5 shows a tower collision preventing part shown in Fig. 1 in use.
Fig. 6 shows an alternative embodiment of the tower collision preventing part of Fig. 1.
Fig. 7 is an enlarged plan view of Area "A" shown in Fig.6.
Fig. 8 shows an alternative embodiment of the tower collision preventing part of Fig. 6.

### [Best Mode]

The above and other aspects, features and advantages of the present invention will become apparent from the following description of exemplary embodiments given in conjunction with the accompanying drawings, in which.

Hereinafter, exemplary embodiments of the present invention will be described with reference to the accompanying drawings. Like components will be denoted by like reference numerals throughout the accompanying drawings.

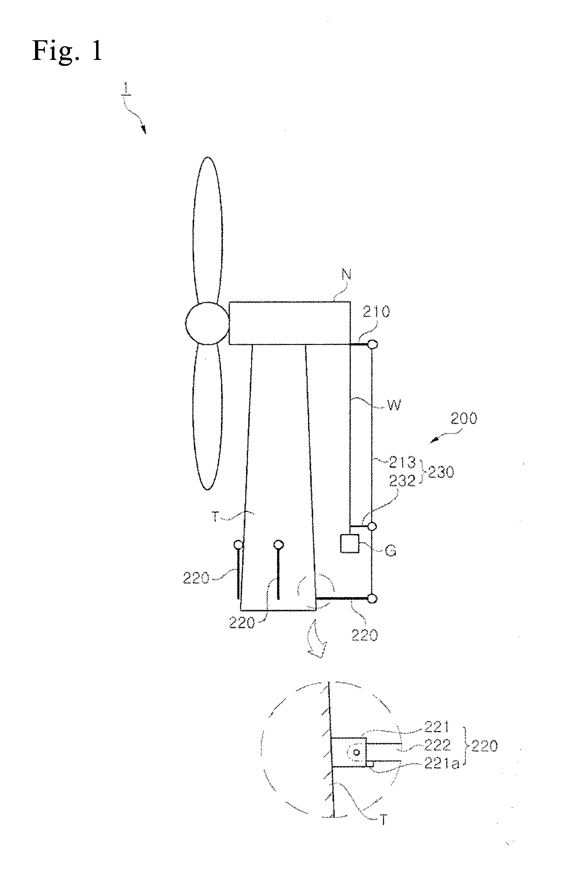

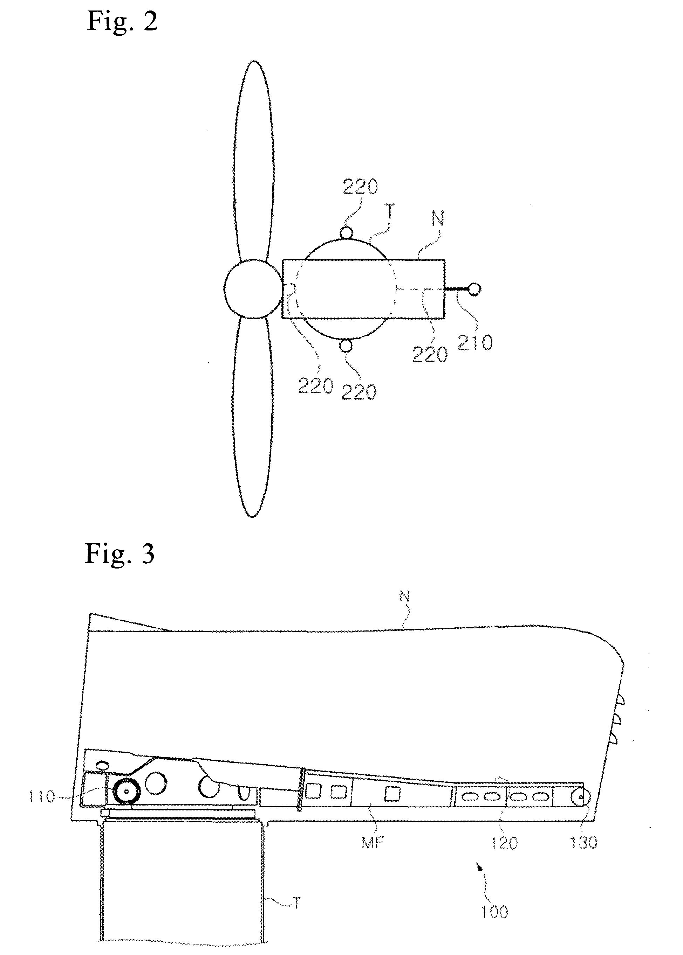

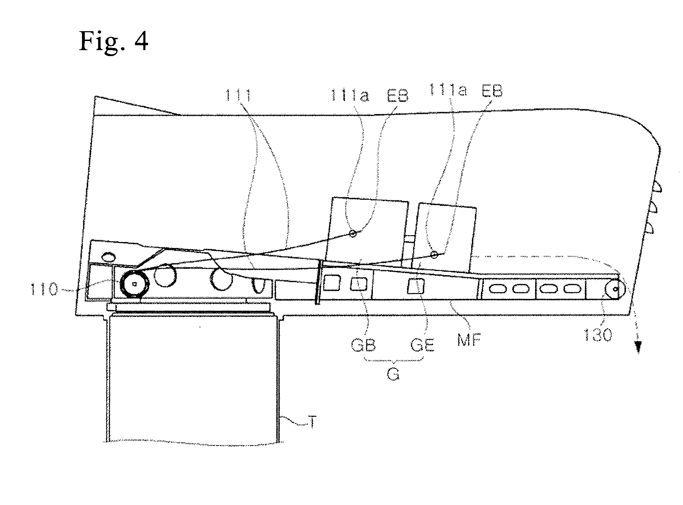

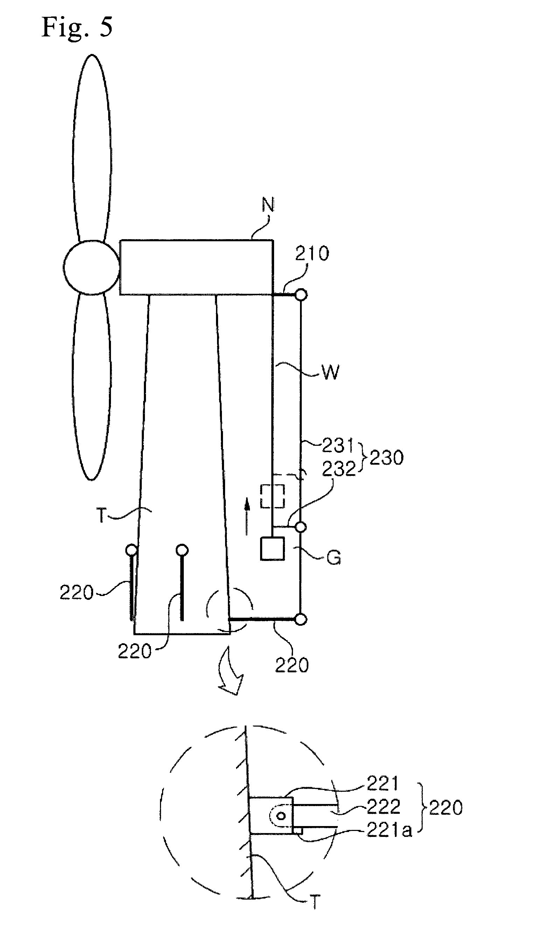

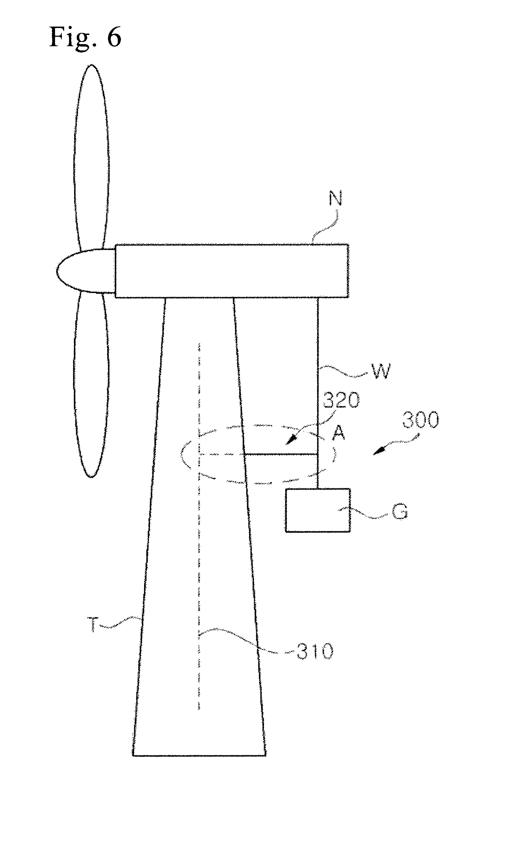

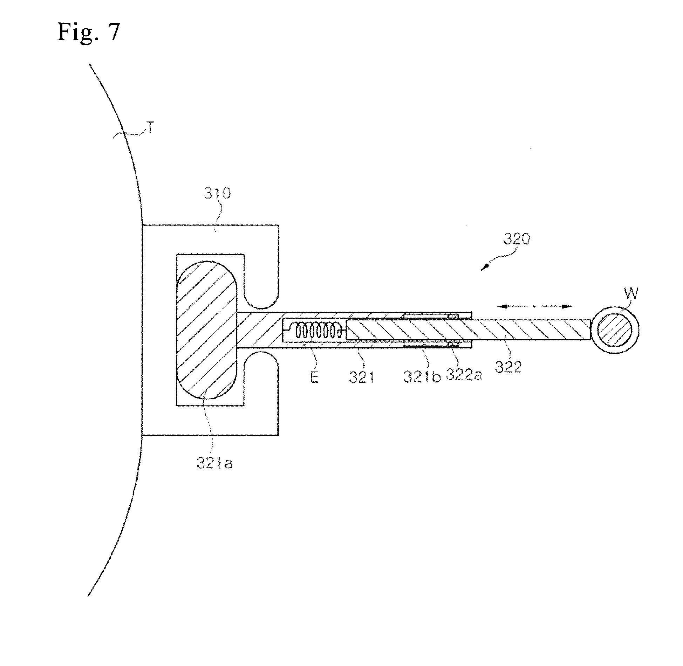

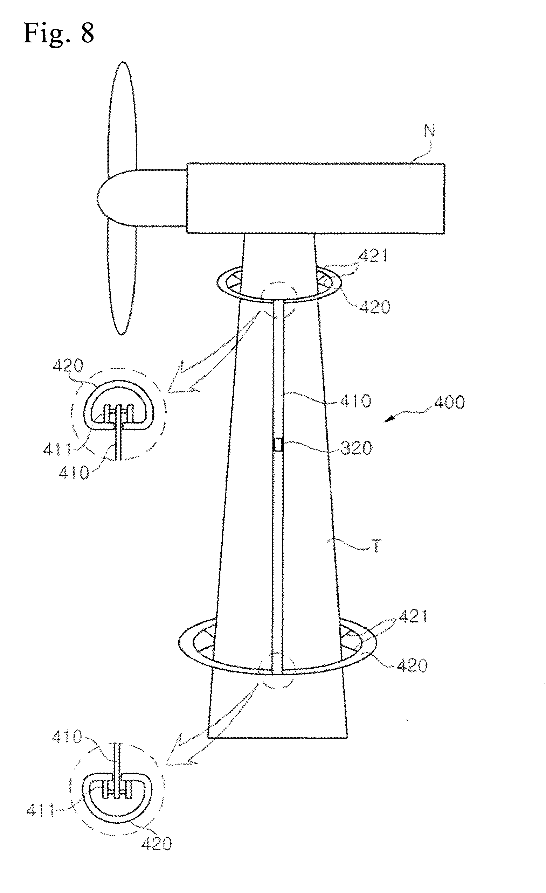

Fig. 1 is a schematic view of a wind power generator according to one exemplary embodiment of the present invention; Fig. 2 is a plan view of the wind power generator of Fig. 1; Fig. 3 is a schematic view of a crane part provided within a nacelle in the wind power generator shown in Fig. 1; Fig. 4 is a schematic view of the crane part shown in Fig. 3 in use; Fig. 5 shows a tower collision preventing part shown in Fig. 1 in use; Fig. 6 shows an alternative embodiment of the tower collision preventing part of Fig. 1; Fig. 7 is an enlarged plan view of Area "A" shown in Fig.6; and Fig. 8 shows an alternative embodiment of the tower collision preventing part of Fig. 6.

As shown in the drawings, a wind power generator 1 according to one exemplary embodiment includes a crane part 100, which is provided to a main frame MF disposed inside a nacelle and supporting a heavy weight G, such as a gear box GB or a generator GE, and transfers the heavy weight into or out of the nacelle N upon replacement of the heavy weight G; and a tower collision preventing part 200, 300 which separates a lifting member W supporting the heavy weight G from a tower T supporting the nacelle N to prevent the heavy weight G from colliding with the tower T.

Referring to Fig. 3, the crane part 100 includes a winch 110 disposed inside the main frame MF disposed inside the nacelle N; a guide rail 120 provided to an upper side of the main frame MF and guiding the heavy weight G such as the gear box GB and the generator GE moved by the winch 110; and a roller 130 provided to the main frame and supporting a wire 111 of the winch 110 when moving the heavy weight G.

Referring to Fig. 3, the winch 110 of the crane part 100 does not occupy an inner space of the nacelle N, which is narrow due to other components, since it is not disposed inside the main frame MF, and is rotatable forward and backward by a motor (not shown). Also, in this embodiment, the winch 110 may employ one of a single-action winch, a double-action winch and a multi-action winch, and may be bolted or welded to a bottom of the main frame MF.

In this embodiment, the winch 110 may be connected to the heavy weight G by providing a shackle 111 a to one end of a wire 111 of the winch 110 and fastening the shackle 111 to an eyebolt EB disposed at one side of the heavy weight G by a bolt, a pin, etc.

Further, the wire 111 connecting the winch 110 and the heavy weight G may be connected to the heavy weight G via a plurality of holes (not shown) formed in the main frame MF. Since the main frame MF is generally formed with holes, there is no need for separation operation for forming a hole.

Referring to Fig. 3, the guide rail 120 of the crane part 110 is provided to the upper side of the main frame MF to prevent direct friction between the heavy weight G and the main frame MF and to guide the heavy weight G when the heavy weight G moves.

In this embodiment, the heavy weight G such as the gear box GB or the generator GE may be secured to the main frame MF while being seated on the guide rail 120. Further, the upper side of the guide rail 120 may have a "T" shape, and a separate support having a groove to be inserted into and supported by the upper side of the guide rail 120 may be provided to a lower side of the heavy weight G, thereby safely guiding the heavy weight G.

Referring to Fig. 3, the roller 130 of the crane part 100 is rotatably provided to a rear end of the main frame MF and supports the wire 111 of the winch 110 when the heavy weight G is moved into or from the nacelle N. A plurality of rollers 130 may be provided not only to the rear end of the main frame MF, but also to other regions of the main frame MF.

That is, although not shown in this embodiment, the rollers 130 may be disposed in an upper middle region of the main frame MF in order to support the wire 111 while smoothly moving the heavy weight G, or may be disposed in a front region of the main frame MF to support the wire 111 in the front region of the main frame MF.

Fig. 4 schematically shows the crane part for the wind power generator according to the embodiment of the invention in use. Next, the use of the crane part 100 according to the embodiment of the invention will be briefly described with reference to Fig. 4.

Fig. 4 illustrates that the crane part is used to move the heavy weight G such as the gear box GB and the generator GE out of the nacelle N, in which connection between the heavy weight G and the winch 110 is achieved by fastening the shackle 111 a disposed at one end of the winch 110 to the eyebolt EB provided to the heavy weight G with a pin or bolt.

When the winch 110 is driven in a state that the heavy weight G is connected to the winch 110, the heavy weight G is moved to the rear end of the main frame MF along the guide rail 120, as shown in Fig. 4. At this time, the rear end of the main frame MF is inclined at a predetermined angle, whereby the heavy weight G can move toward the rear end of the main frame MF by gravity.

When the heavy weight G is moved to the rear end of the main frame MF, a door (not shown) provided to the nacelle N is opened and closed, so that the heavy weight G is moved to the outside of the nacelle N for repair and replacement.

As such, according to the embodiment, the crane part 100 is provided to the main frame MF inside the nacelle N, and thus is structurally stably used without increasing the size of the nacelle N.

Referring to Fig. 1, the tower collision preventing part may be a tower collision preventing part 200, which includes a first support 210 provided to the nacelle N, a second support 220 provided to the tower T, and an induction line 230 connecting the first support 210, the second support 220 and the lifting member W such that a predetermined space is maintained between the lifting member W and the tower T.

Referring to Fig. 1, the first support 210 of the tower collision preventing part 200 is provided to an outer wall of the nacelle N and supports an upper end of the induction line 230. One end of the first support 210, to which the induction line 230 is connected, may have a ring shape so as to be easily connected to the induction line 230.

In addition, according to the embodiment, a plurality of first supports 210 may be provided to the outer wall of the nacelle N, and may be rotatable together with the second support 220 described hereinafter.

As shown in Fig. 1, the second support 220 of the tower collision preventing part 200 is provided to a lower portion of the tower T and supports a lower end of the inducing member 230. One end of the second support 220, to which the induction line 230 is connected, may have a ring shape like the first support 210.

In this embodiment, as shown in Fig. 2, two pairs of second supports 220 may be disposed around the tower T to be separated from each other such that the induction line 230 can be connected in any direction regardless of a rotating direction of the nacelle N.

In addition, in this embodiment, as shown in the enlarged view of Fig. 1, the second support 220 may include a base support 221 and a rotation support 222 rotatably coupled to the base support 221 by a pin P such that the second support 220 can be stored in a folded state and spread out in use.

Further, the base support 221 may be provided with a stopper 221 a to prevent the rotation support 222 from rotating beyond an angle of 90 degrees about a longitudinal centerline of the tower T even though the rotating support 222 is maximally rotated.

In addition, in this embodiment, the rotation support 222 may be automatically rotated. Although not shown, the rotation support 222 may be formed at one end thereof with a driven gear, which may be engaged with a driving gear driven by a motor inside the base support 221 such that the rotation support 222 can be driven to rotate by the motor. Further, engagement between the driving gear and the driven gear may maintain a rotated state, thereby maintaining tension of a first induction line 231 connecting the first support 210 to the second support 220.

The induction line 230 of the tower collision preventing part 200 maintains a predetermined space between the lifting member W and the tower T when the lifting member W such as a wire is lifted or descended, thereby preventing collision between the heavy weight G lifted or descended by the lifting member W and the tower T. Referring to Fig. 1, the induction line 230 includes the first induction line 231 connecting the first support 210 to the second support 220, and a second induction line 232 connecting the first induction line 231 to the lifting member W.

In this embodiment, the induction line 230 may be a wire or a rope, and connection between the first induction line 231 and the first support 210 or the second support 220 may be achieved by providing rings (not shown) to both ends of the first induction line 231 such that the rings can be latched to the first support 210 or the second support 220.

Further, in this embodiment, the second induction line 232 may be secured at one end thereof to the lifting member W to move integrally with the lifting member W, and connected at the other end thereof to the first induction line 231 to be moved up and down along the first induction line 231.

That is, the one end of the second induction line 232 may be secured to the lifting member W through a plate and a bolt, and the other end thereof may have a ring shape to be moved up and down while being supported by the first induction line 231.

In addition, in this embodiment, the second induction line 232 has to withstand more of the weight of the heavy weight G than the first induction line 231, and thus may collide with the heavy weight G if it is made of a general wire or a soft material. Therefore, the second induction line 232 may be made of a hard material, such as a rigid wire, rod, or bar.

Fig. 5 shows the tower collision preventing part according to the exemplary embodiment of the present invention in use. Now, the use state of the tower collision preventing part 200 according to this embodiment will be briefly described with reference to Fig. 5.

First, after the second support 220 coupled to the tower T is spread out, the first induction line 231 is connected to the first support 210 coupled to the nacelle N and the second support 220 in a spread-out state using the crane (not shown). Connection between the first induction line and the first and second supports 210 and 220 may be achieved by the aforementioned latching method using the ring.

Next, a right end of the second induction line 232 is movably connected to the first induction line 231, and then a left end of the second induction line 232 is coupled to the lifting member W such as a wire using a plate and a bolt. Coupling between the left end of the second induction line 232 and the lifting member W using the bolt facilitates separation of the left end of the second induction line 232 from the lifting member W such that the heavy weight G can be introduced into the nacelle N at an upper portion of the tower T.

After the aforementioned connection is completed, as shown in fig. 5, when a heavy weight G, such as a generator or a transmission unit is lifted toward the inside of the nacelle N, the lifting member W such as a wire is lifted while being supported on the first induction line 231 by the second induction line 232, thereby significantly reducing shaking of the heavy weight G, as compared with a conventional technique even if the wind blows.

Thus, according to the exemplary embodiment, the heavy weight G is safely lifted without shaking upon replacement of the heavy weight G, thereby shortening working time. Further, the heavy weight G is prevented from colliding with the tower T, thereby preventing damage to the heavy weight G and the tower T.

Referring to Fig. 6, the tower collision preventing part may be a lifting support unit 300, which includes a tower guide rail 310 provided to the tower T, and a support module 320 supported at one end thereof to be lifted or descended along the tower guide rail 310 and connected at the other end thereof to the lifting member W to resiliently maintain a distance between the lifting member W and the tower T.

In this embodiment, the heavy weight G may be a lifting box in which components are accommodated, or a component itself.

As shown in Fig. 6, the tower guide rail 310 of the lifting support unit 300 is arranged in a longitudinal direction of the tower T and guides a base bar 321 of the support module 320 (to be described later) to move in the longitudinal direction of the tower T. Thus, the tower guide rail 310 may have a rectangular shape cut at one side thereof.

In this embodiment, two pairs of tower guide rails 310 separated from each other around the tower T may be provided to guide the support module 320 in any direction of the tower T.

Referring to Fig. 7, the support module 320 of the lifting support unit 300 is supported at one end thereof to be lifted or descended on the tower guide rail 310, and connected at the other end thereof to the lifting member W, which lifts or descends the heavy weight G into the nacelle N, to allow the lifting member W to maintain a predetermined distance from the tower T, thereby preventing collision between the tower T and a lifting member LB.

In this embodiment, as shown in Fig. 7, the support module 320 includes the base bar 321 supported at a lower end thereof to be lifted or descended on the tower guide rail 310, and a support bar 322 having a bottom portion connected to the base bar 321 to be retractable from side to side in Fig. 7 and a top portion connected to the lifting member W.

The base bar 321 of the support module 320 is provided at the lower end thereof with an enlarged portion 321a, as shown in Fig. 7. Not only does the enlarged portion 321a firmly supports the base bar 321, but also prevents the base bar 321 from being separated from the tower guide rail 310.

Further, the top portion of the base bar 321 is provided with a passage through which the support bar 322 can move, and an elastic member E, such as a spring, for elastically supporting the support bar 322 is disposed between the bottom of the passage and the lower end of the support bar 322 to urge the support bar 322 to be elastically retractable. Alternatively, the support bar 322 may be retractable through a shock absorber or the like instead of the foregoing elastic member E.

In addition, the top portion of the base bar 321 may be formed with a guide groove which guides a projection 322a of the support bar 322.

Referring to Fig. 7, the support bar 322 of the support module 320 includes the projection 322a at a center thereof. The projection 322a is supported by the guide groove 321b of the base bar 321, and serves to support the support bar 322 to move from side to side while preventing the support bar 322 from being separated from the base bar 321.

Further, the upper end of the support bar 322 may have a ring shape in order to prevent separation from the lifting member W after connection to the lifting member W, such as a wire.

Next, the lifting support unit 300 according to one embodiment will be briefly described.

In this embodiment, when the heavy weight G receiving components therein is raised into or descended out of the nacelle N, the lifting member W for lifting the heavy weight G is supported by the support module 320 such that a predetermined distance can be maintained between the heavy weight G and the tower T, thereby preventing collision between the heavy weight G and the tower T.

In addition, the support module 320 is lifted or descended together with the lifting member W along the tower guide rail 310, so that the distance between the tower T and the heavy weight G can be constantly maintained without restricting the lifting height of the heavy weight G.

Fig. 8 is a schematic view of a lifting support unit according to an alternative embodiment of the invention disposed in the wind power generator.

A lifting support unit 400 according to this embodiment is different from that of the above exemplary embodiment in that the lifting support unit 400 further includes a pair of support rails 420 disposed in the longitudinal direction of the tower T and separated from each other such that a tower guide rail 410 can rotate along an outer circumference of the tower T, and a roller 411 is provided to each of the tower guide rails 410 such that the tower guide rails 410 can smoothly move on the support rail 130.

Further, the support rail 420 may be welded or bolted to the outer wall of the tower T by the support rod 421.

This embodiment has an advantage of maintaining the distance between the tower T and the heavy weight G since the support rail 420 supports the heavy weight G in any direction of the tower T without a plurality of tower guide rails 410.

Although some embodiments have been described herein, it should be understood by those skilled in the art that these embodiments are given by way of illustration only, and that various modifications, variations, and alterations can be made without departing from the spirit and scope of the present invention. Accordingly, the modifications, variations, and alterations are also involved in the accompanying claims and equivalents thereof.

## Claims

1. A wind power generator comprising:
a crane part provided to a main frame disposed inside a nacelle and supporting a heavy weight, such as a gear box or a generator, to transfer the heavy weight into or out of the nacelle upon replacement of the heavy weight; and
a tower collision preventing part separating a lifting member supporting the heavy weight from a tower supporting the nacelle to prevent the heavy weight from colliding with the tower.

2. The wind power generator according to claim 1, wherein the crane part comprises:
a winch disposed in the main frame and carrying the heavy weight into or out of the nacelle upon replacement of the heavy weight; and
a guide rail provided to the main frame and guiding the heavy weight.

3. The wind power generator according to claim 2, wherein the winch is disposed inside the main frame.

4. The wind power generator according to claim 2, wherein the guide rail is disposed at an upper portion of the main frame, and the heavy weight moves on the guide rail when carried into or out of the nacelle.

5. The wind power generator according to claim 2, wherein the crane part further comprises at least one roller provided to the main frame and supporting a wire of the winch.

6. The wind power generator according to claim 1, wherein the tower collision preventing part comprises:
a first support provided to the nacelle;
a second support provided to the tower; and
an induction line connecting the first support, the second support and the lifting member with one another such that a predetermined space is maintained between the lifting member and the tower.

7. The wind power generator according to claim 6, wherein the second support comprises:
a base support coupled to the tower; and
a rotation support rotatably coupled to the base support.

8. The wind power generator according to claim 7, wherein the base support comprises a stopper restricting rotation of the rotation support.

9. The wind power generator according to claim 6, wherein the tower collision preventing part comprises two pairs of second supports separated from each other while facing each other around the tower.

10. The wind power generator according to claim 6, wherein the induction line comprises:
a first induction line connecting the first support to the second support; and
a second induction line connecting the first induction line to the lifting member, the second induction line secured at one end thereof to the lifting member to be lifted or descended integrally with the lifting member and connected at the other end thereof to the first induction line to move up and down along the first induction line.

11. The wind power generator according to claim 6, wherein the lifting member comprises a wire connected to the crane part.

12. The wind power generator according to claim 1, wherein the tower collision preventing part comprises a lifting support unit,
the lifting support unit comprising:
a tower guide rail provided to the tower; and
a support module supported at one end thereof to be lifted or descended along the tower guide rail and connected at the other end thereof to the lifting member to resiliently maintain a distance between the lifting member and the tower.

13. The wind power generator according to claim 12, wherein the support module comprises:
a base bar supported to be lifted or descended along the tower guide rail; and
a support bar connected at one end thereof to the base bar to be retractable in a direction transverse to a longitudinal direction of the tower, and connected at the other end thereof to the lifting member.

14. The wind power generator according to claim 13, further comprising: an enlarged portion at one end of the base bar supported on the tower guide rail.

15. The wind power generator according to claim 13, wherein the other end of the support bar connected to the lifting member has a ring shape.

16. The wind power generator according to claim 12, wherein the tower collision preventing part comprises two pairs of tower guide rails separated from each other while facing each other around the tower.
